Europäisches Patentamt

European Patent Office

Office européen des brevets

(19)

(11) Numéro de publication : **0 037 048**
**B1**

# (12) FASCICULE DE BREVET EUROPÉEN

(45) Date de publication du fascicule du brevet :
**21.11.85**

(21) Numéro de dépôt : **81102160.9**

(22) Date de dépôt : **23.03.81**

(51) Int. Cl.⁴ : **H 04 Q   1/457, H 04 Q 11/04**

(54) **Dispositif de confirmation de signaux.**

(30) Priorité : **28.03.80 FR 8007074**

(43) Date de publication de la demande :
**07.10.81 Bulletin 81/40**

(45) Mention de la délivrance du brevet :
**21.11.85 Bulletin 85/47**

(84) Etats contractants désignés :
**AT BE CH DE FR GB IT LI LU NL SE**

(56) Documents cités :
**FR-A- 2 374 808
REVIEW OF THE ELECTRICAL COMMUNICATION
LABORATORIES, vol. 27, nos. 9-10, sept.-oct. 1979,
Tokyo, JP, KANEKO et al. "Signaling equipment for
digital switching system", pages 740-757
COMMUTATION ET TRANSMISSION, vol. 1, no. 1,
septembre 1979, Paris, FR, VIARD et al. "La nouvelle
gamme de centraux temporels de CIT-Alcatel",
pages 87-102
COMMUTATION ET ELECTRONIQUE, no. 59, octobre
1977, Paris, FR, CAMPAGNO et al. "Système E10;
l'équipement de tonalités et auxiliaires", pages 99-
105**

(73) Titulaire : **COMPAGNIE INDUSTRIELLE DES TELE-
COMMUNICATIONS CIT-ALCATEL S.A. dite:
12, rue de la Baume
F-75008 Paris (FR)**

(72) Inventeur : **Behague, François
9, Allée du Bocage de Beaudreville
F-91190 Gif Sur Yvette (FR)**
Inventeur : **Pouillard, Jean
43, rue Guynemer
F-94190 Villeneuve Saint Georges (FR)**

(74) Mandataire : **Weinmiller, Jürgen et al
Zeppelinstrasse 63
D-8000 München 80 (DE)**

## Description

La présente invention concerne un dispositif de confirmation des signaux issus d'un récepteur de fréquences tel que celui décrit dans le brevet français n° 1 603 175.

Dans un central de commutation temporelle les récepteurs de fréquences sont reliés en entrée à des lignes de réseau sortantes issues du réseau de connexion et, en sortie, à des lignes de test accédant à un organe de commande dit multienregistreur. Un multienregistreur est constitué par une logique programmée associée à une mémoire circulante. Il a pour but d'assurer simultanément le traitement de plusieurs dizaines d'établissements ou ruptures de communications et de confirmer la présence des signaux de numérotation par une circulation cyclique de mots enregistreurs constitués d'éléments binaires représentatifs desdits signaux à l'intérieur de la mémoire. Un article publié dans la revue Commutation et Electronique n° 55 de novembre 1976, pages 44, 45, décrit la structure et le fonctionnement d'un multienregistreur.

La confirmation des signaux de numérotation est directement effectuée par l'unité de commande dans le cas des centraux de gamme moyenne (4 000 à 30 000 abonnés). Dans le cas des centraux de commutation temporelle de haut de gamme (voir l'article intitulé « La nouvelle gamme de centraux temporels de CIT-ALCATEL » paru dans la revue n° 1 Commutation et Transmission de septembre 1979, pages 87 à 93), l'unité de commande formée de deux calculateurs travaillant en partage de charge, a été déchargée de la fonction de confirmation des signaux de numérotation.

On connaît déjà par le brevet français n° 2 374 808, un dispositif de confirmation des signaux numériques issus d'un récepteur numérique de fréquence en sortie duquel il est connecté dans un central téléphonique de commutation temporelle à commande centralisée ; ce dispositif est inséré en amont des entrées du calculateur et il est basé sur la reconnaissance de profils de signaux.

Le but de l'invention est également de réaliser un dispositif pouvant remplir cette fonction de confirmation des signaux de numérotation, toutefois cette fonction est ici obtenue au moyen d'un procédé basé sur la présence successive d'un même état en sortie du récepteur numérique. La mise en œuvre de l'invention permet d'augmenter la puissance et la rapidité de traitement des calculateurs en les soulageant des tâches répétitives imposées par le contrôle et la confirmation des signaux de numérotation bifréquences et en utilisant les zones de mémoire ainsi économisées pour obtenir un renforcement du nombre des instructions portant sur le logiciel opérationnel.

Rappelons qu'un récepteur numérique de fréquences est constitué, d'une part, d'une partie « filtrage » comprenant autant de filtres élémentaires d'analyse passe-bande qu'il y a de fréquences composantes différentes dans les signaux susceptibles d'être reçus et, d'autre part, d'une partie traitement permettant une analyse de l'énergie dans les différents filtres.

Le récepteur numérique de fréquences comporte 32 récepteurs élémentaires ou canaux de 8 filtres travaillant en partage de temps, soit un récepteur élémentaire par voie temporelle d'une trame de 32 intervalles de temps. Les 8 filtres d'un récepteur élémentaire assurent la détection de deux fréquences émises parmi un groupe de 8 fréquences.

Chaque filtre centré sur une des 8 fréquences détermine le niveau d'énergie relatif à cette fréquence et des tests relatifs aux différents niveaux d'énergie permettent de déterminer si l'on est en présence d'une signalisation bi-fréquence. Ces tests s'effectuent par comparaison des trois niveaux d'énergie les plus élevés parmi les huit niveaux d'énergie obtenus par filtrage, lesdits niveaux étant préalablement mis sous forme logarithmique. On trouvera des renseignements complémentaires sur le récepteur numérique de fréquences et le traitement des énergies dans l'article « Système E10 L'équipement de tonalités et auxiliaires », paru dans la revue Commutation et Electronique n° 59 d'octobre 1977 pages 104 à 107.

Le récepteur numérique de fréquence utilisé dans la gamme haute est identique à celui réalisé pour la gamme moyenne en ce qui concerne les parties « filtres » et « test des énergies », cette dernière étant reliée directement en sortie au dispositif logique de confirmation de signaux.

Le récepteur numérique de fréquences reçoit en provenance du réseau de connexion temporel les signaux bifréquences de différents codes (code clavier, code MF Socotel, code R2) transmis en échantillons de temps sur les lignes de réseau sortantes et retransmet en sortie trois informations codées sous forme numérique :

les deux niveaux d'énergie les plus élevés repérés par les adresses de deux filtres excités délivrant lesdits niveaux ;

un état logique 1 sur une parmi trois sorties selon le type monofréquence, bifréquence ou trifréquence de signal reçu à l'entrée.

Les informations de sortie du récepteur numérique de fréquences indiquent l'état instantané de celui-ci et nécessitent d'être confirmées.

Le dispositif de confirmation de signaux génère des temps de confirmation différents selon le type de signalisation.

L'invention a pour objet un dispositif de confirmation de signaux numériques issus d'un récepteur numérique de fréquences qui équipe un central téléphonique à commutation temporelle et à commande centralisée par calculateur, qui est constitué d'un groupe de récepteurs élémentaires par trame dans lequel chaque récepteur élémentaire dessert une voie temporelle et dont les circuits de sortie dudit récepteur sont reliées au dispositif de confirmation inséré entre ces circuits de sortie et des circuits d'entrée/sortie du calculateur.

Le dispositif de confirmation selon l'invention comporte trois logiques interconnectées qui sont respectivement

une logique de transcodage de signaux numériques de fréquences, assurant la mise en tampon des informations issues du récepteur numérique de fréquence ainsi que l'élaboration d'un signal dit incident significatif du type des signaux numériques ;

une logique de traitement de l'état des voies assurant le traitement d'interventions internes telles que sélection de page et de mot d'une mémoire d'état de voie, écriture ou lecture des signaux d'état en mémoire, ou externes telles que prise ou libération d'une voie par l'unité de commande ;

une logique de traitement et temporisation assurant la détermination et l'enchaînement des étapes de la confirmation du signal.

Un avantage du dispositif de confirmation selon l'invention est de permettre d'éliminer l'apparition momentanée d'un état perturbateur, par exemple l'environnement sonore ou la voix de celui qui fait appel à l'aide d'un poste à clavier.

Un autre avantage du dispositif de confirmation de signaux selon l'invention est l'élimination des états transitoires provoqués en sortie du récepteur numérique de fréquences par une apparition ou un changement de signalisation sur une voie temporelle.

L'invention va être précisée par la description donnée ci-après d'un mode préféré de réalisation de l'invention en référence au dessin annexé dans lequel :

La figure 1 représente schématiquement un dispositif de confirmation de signaux selon l'invention et son environnement.

La figure 2 donne schématiquement la structure interne du dispositif de confirmation de signaux (DCS) selon l'invention.

La figure 3 représente un schéma des circuits d'une logique de transcodage (TRAN) faisant partie du dispositif selon la figure 2.

La figure 4 désigne les champs de données imbriqués d'un compteur de temps (CT).

La figure 5 représente le découpage de l'intervalle de temps IT en huit instants élémentaires.

Les figures 6 et 7 donnent la structure d'un signal incident fonctionnel.

La figure 8 représente un schéma d'un circuit d'analyse des signaux anormaux.

La figure 9 représente un schéma de circuits d'élaboration du type de séquence.

La figure 10 représente le schéma des circuits d'une logique de traitement de l'état des voies faisant partie du dispositif selon la figure 2.

La figure 11 donne le format d'un mot d'une table de commandes élémentaires.

La figure 12 donne la structure d'une page d'une mémoire d'état des voies.

La figure 13 représente un schéma des circuits d'une logique de traitement et temporisation faisant partie du dispositif selon la figure 2.

La figure 14 donne la structure d'une mémoire MF1.

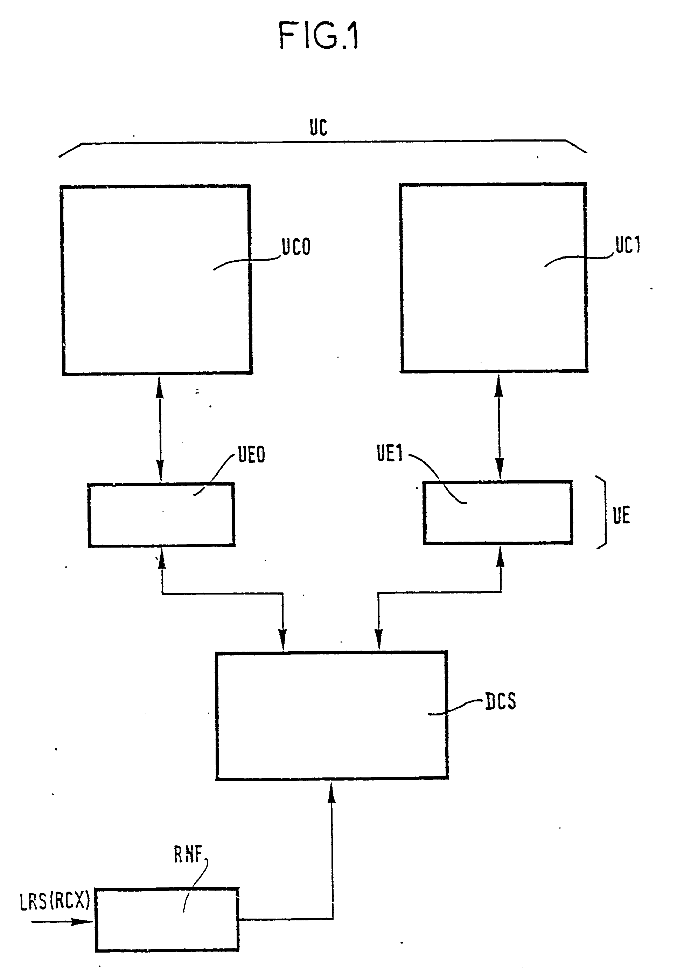

Comme représenté dans la figure 1, un récepteur numérique de fréquences RNF est relié d'une part à une ligne réseau sortante LRS issue d'un réseau de connexion RCX (non représenté) et d'autre part à un dispositif de confirmation de signaux DCS.

La confirmation de l'apparition ou de la disparition d'une signalisation sur une voie temporelle indique qu'un changement d'état s'est produit sur cette voie. Le dispositif de confirmation DCS se porte alors en appel à travers des unités d'échange $UE_0$, $UE_1$ vers l'un des calculateurs UC0 et UC1 de l'unité de commande dupliquée UC et tient à la disposition dudit calculateur les informations relatives à ce changement d'état.

Les voies temporelles de signalisation sont constituées par des intervalles de temps successifs IT d'une durée de 3,9 microsecondes chacun (256 kHz). 32 voies temporelles (IT0 à IT31) constituent une trame d'une durée de 125 microsecondes (8 000 Hertz). Chaque intervalle de temps IT est lui-même découpé en 8 instants élémentaires w1 à w8, chacun d'une durée de 488 nanosecondes (2 048 kilohertz). Ces instants w permettent au dispositif de confirmation DCS d'élaborer les commandes élémentaires nécessaires au traitement des voies temporelles dont les intervalles de temps IT sont délimités par des hauts de signaux d'horloge.

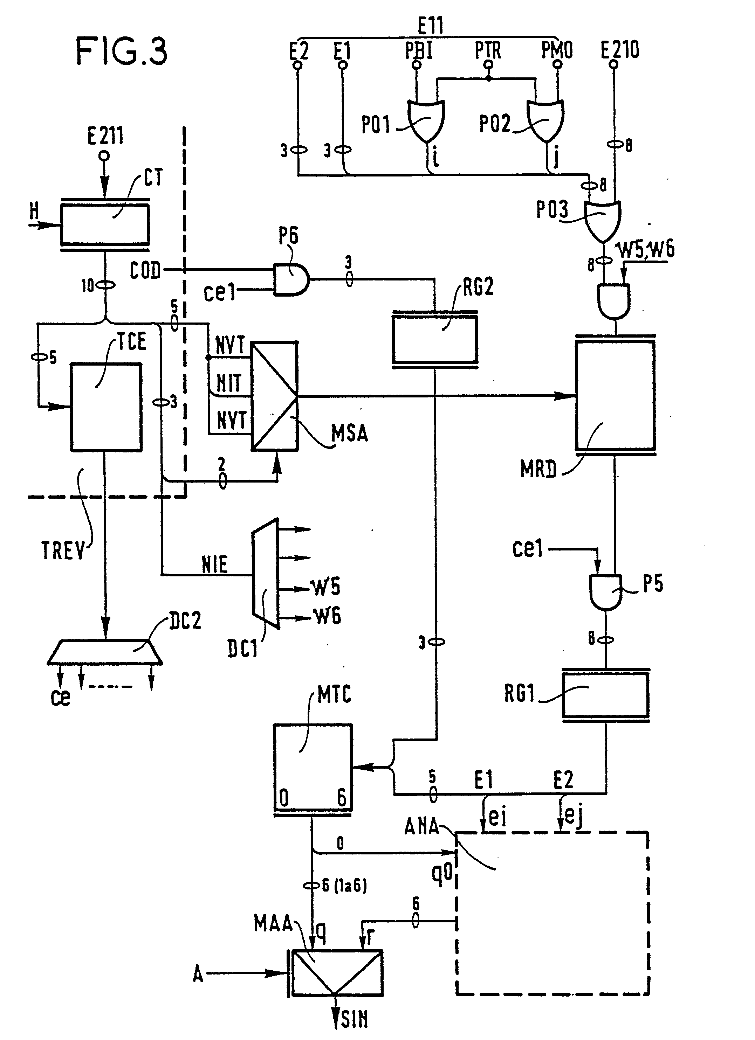

Une base de temps générale (non représentée) du central génère des signaux H. Le dispositif de confirmation est piloté par un compteur de temps CT recevant en entrée les signaux H (figure 3).

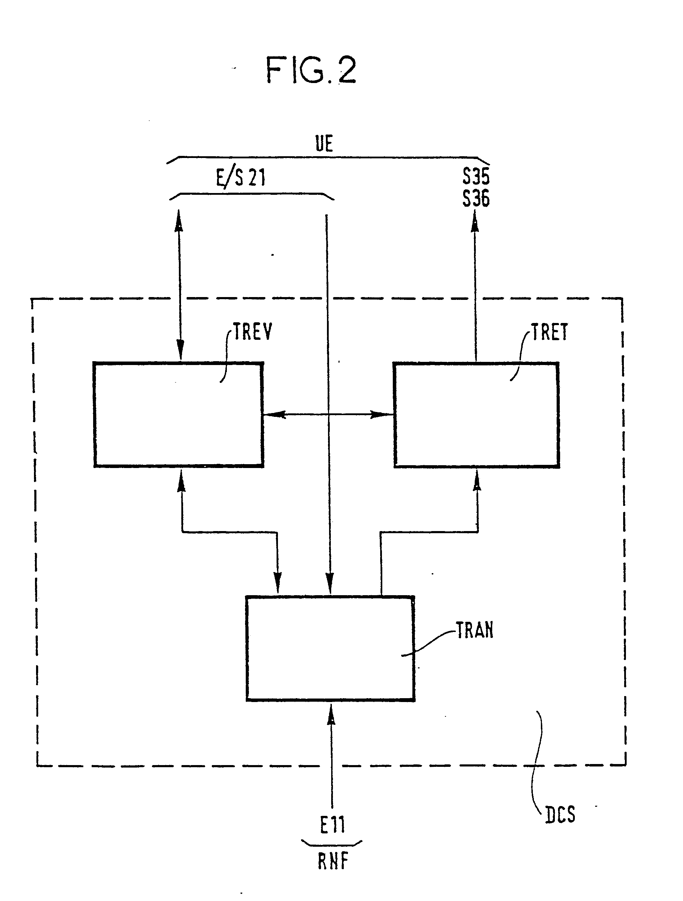

Le dispositif de confirmation de signaux DCS comporte trois parties associées de circuits logiques (figure 2) :

une logique de transcodage TRAN permettant la mise en tampon des informations issues du récepteur numérique de fréquences, ainsi que l'élaboration d'un signal incident et d'un type de séquence ;

une logique de traitement de l'état des voies TREV permettant le traitement d'interventions internes (sélection de page et de mot de la mémoire, écriture ou lecture des signaux d'état en mémoire) ou externes (prise ou libération d'une voie par l'unité de commande) ;

une logique de traitement et temporisation TRET permettant de déterminer et enchaîner les étapes de la confirmation du signal.

3

Le dispositif de confirmation de signaux DCS comporte également :

des liaisons d'entrée E11 issues du récepteur de fréquences RNF ;

des liaisons d'entrées/sorties E/S21 permettant les échanges d'informations entre les logiques TREV, TRAN, TRET, d'une part, et l'unité de commande dupliquée UC, via l'unité d'échange UE, d'autre part ;

des liaisons internes réalisant l'interconnexion desdites logiques.

La logique de transcodage TRAN (figure 3) est pilotée par le compteur de temps CT situé dans la logique de traitement des voies (TREV). Le champ de sortie de ce compteur couvre dix éléments binaires (eb) référencés $2^0$ à $2^9$.

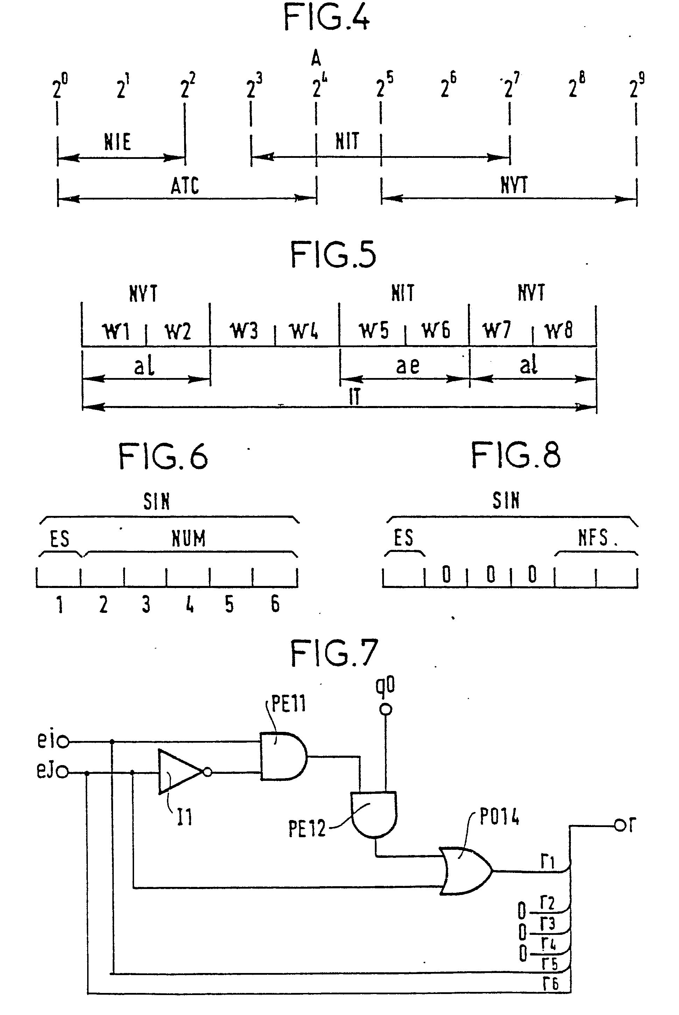

La figure 4 donne la signification du contenu du compteur. Les cinq eb de poids faibles définissent 32 instants élémentaires w, soit 4 intervalles de temps IT de 8 w. L'élément binaire de poids fort noté A de ce champ de 5 eb partage ce temps de travail en deux : ainsi les 16 premiers instants élémentaires (A = 0) seront consacrés au traitement des signaux fonctionnels et les 16 derniers (A = 1) au traitement des signaux anormaux.

Le champ NIE défini par les trois premiers eb désigne le numéro d'instant élémentaire w.

Les 5 eb de poids forts définissent le numéro de voie traitée NVT.

Le champ NIT (eb $2^3$ à $2^7$) représente le numéro d'intervalle de temps IT de la voie.

Le champ ATC constitué par les 5 eb de poids faibles permet également d'adresser une mémoire ou table TCE (figure 3) élaborant des commandes élémentaires, ladite table étant située dans la logique de traitement de l'état des voies (TREV).

Les informations relatives à chaque voie issues du récepteur numérique de fréquences sont les suivantes :

les deux énergies les plus élevées E1, E2 codées sur 3 eb ;

des signaux PBI (présence bifréquence), PTR (présence trifréquence) ou PMO (présence monofréquence), chacun codés sur 1 eb.

Le dispositif de confirmation voit un flot d'informations qui arrive au rythme d'un intervalle de temps IT. Comme celui-ci traite une voie temporelle en quatre IT, il est nécessaire de mettre en tampon les informations entrantes. Une mémoire tampon MRD joue ce rôle de réducteur de débit. Elle est adressée en écriture tous les IT par le champ NIT du compteur CT ou en lecture par le champ NVT dudit compteur désignant le numéro de la voie traitée.

Le champ NIE du compteur CT est reçu dans un décodeur DC1 des instants de temps élémentaires w.

Les deux eb de poids fort du champ NIE permettent en outre de sélectionner les données d'entrées NVT et NIT d'un multiplexeur sélecteur d'adressage MSA de la mémoire tampon MRD selon le chronogramme représenté figure 5. Les 8 instants élémentaires w d'un intervalle de temps IT sont groupées par paire, l'adressage en lecture al) de la mémoire MRD s'effectuant durant les instants w1, w2 et w7, w8 et l'adressage en écriture (ae) s'effectuant durant les instants w5, w6 à travers une porte ET.

La présence d'un signal soit bifréquences ou trifréquence (PBI + PTR), soit trifréquences ou monofréquence (PTR + PMO) est signalée en sortie d'une porte OU, PO1, PO2. Une porte OU PO3 recueille l'état logique résultant de la présence dudit signal ainsi que les deux énergies les plus élevées E1, E2. La porte PO3 recueille également les informations issues de l'unité de commande et transmises par des liaisons E210.

Un décodeur DC2 délivre les commandes élémentaires ce nécessaires issues de la table TCE de la logique TREV.

Les informations de lecture de la mémoire MRD sont chargées, au moyen d'une commande élémentaire ce1 à travers une porte ET P5 dans un registre RG1. La commande élémentaire ce1 charge également à travers une porte ET P6 un registre RG2 avec l'indication du code COD dans lequel est transmis le signal (code clavier, code MF, code R2), cette indication étant fournie par la logique TREV.

Les sorties des registres RG1 et RG2 adressent une mémoire de transcodage MTC qui élabore en sortie un signal incident fonctionnel SIN dont la structure est donnée figure 6.

Il y a présence de signal fonctionnel lorsqu'il s'agit d'un signal bifréquence faisant partie du code en cours d'utilisation. La combinaison bifréquence reçue désignant un chiffre de la numérotation est traduite par les eb NUM de rang 2 à 6. Dans ce cas l'eb ES de la structure du signal est à l'état 1.

Il y a présence d'un signal anormal dans les cas suivants :

un signal bifréquence PBI est présent mais ses deux fréquences ne font pas partie du code utilisé ;

un signal monofréquence PMO ou trifréquence PTR est présent.

Un signal est désigné comme étant anormal par la mise à l'état 1 de l'eb ES de la structure anormale. Les eb NUM sont annulés et les deux derniers eb définissent la catégorie du signal anormal de la façon suivante :

0 0 rien

0 1 une seule fréquence (PMO)

1 0 deux fréquences (hors code)

1 1 trois fréquences (PTR).

Ce codage est délivré en sorties i et j des portes OU PO1 et PO2 à une entrée commune.

Elaboration du signal incident fonctionnel ou anormal :

La mémoire de transcodage MTC est constituée de quatre mémoires programmables divisées en deux groupes. La sélection du groupe est faite par l'eb de poids fort du code. L'adressage dans le groupe est donné par les 2 eb du code restant et les 6 eb d'indication des deux énergies (E1, E2) les plus élevées, soit 7 eb de rang 0 à 6 délivrés en sorties q0 à q6. Les eb lus en sorties q1 à q6 de la mémoire MTC donnent la structure du signal fonctionnel.

L'analyse des signaux anormaux est effectuée par un circuit ANA (représenté en détail figure 7). Il comporte une porte ET PE11 commandée par les entrées ei et ej porteuses des états logiques délivrés par les sorties i et j des portes OU PO1, PO2, lesdits états ayant été préalablement stockés sous forme d'eb dans le registre RG1 via la mémoire tampon MRD.

L'entrée ej de la porte PE11 est commandée via un inverseur I1. Une seconde porte ET PE12 est commandée par la porte PE11 et par la sortie q0 de la mémoire de transcodage MTC. Une porte OU PO14, commandée par la porte PE12 et par l'entrée ej du circuit ANA, est activée lors de la présence d'un signal anormal (monofréquence, trifréquence ou bifréquence hors code).

Le fonctionnement du circuit d'analyse ANA est le suivant :

— présence d'un signal fonctionnel.

L'entrée ei présente un état 1 indicateur d'un signal bifréquence et l'entrée ej est à l'état 0. La porte PE1 est à l'état 1.

Le signal bifréquence faisant partie du code, les sorties q0 et q1 de la mémoire de transcodage MTC sont à l'état 0. La porte PE12 est donc à l'état 0 ainsi que la porte PO14. L'élément binaire ES du signal incident SIN est mis à l'état 0 par la sortie de la porte PO14 et le fil r1 lors de la sélection des données d'entrée r d'un multiplexeur aiguilleur d'analyse MAA du signal, ladite sélection étant contrôlée par l'eb A = 1 du compteur de temps CT.

Ceci confirme l'analyse faite par la mémoire MTC de la présence d'un signal fonctionnel (mise à 0 de ES par q1 à 0 durant la sélection des données d'entrées Q du multiplexeur MAA par A = 0).

— Présence d'un signal anormal :

La structure d'un signal incident SIN anormal est donnée figure 8. L'élément binaire de rang 1 ES à l'état 1 indique la nature anormale du signal. Les eb de rang 2 à 4 sont figés à l'état 0.

Les eb NFS de rang 5 et 6 indiquent le nombre de fréquences composites du signal reçu par le récepteur numérique de fréquences.

a) Signal monofréquence.

Les entrées ei et ej sont respectivement à l'état 0 et 1.

Le signal n'étant pas une bifréquence hors code, l'entrée q0 est à l'état 0. Les portes PE11, PE12 sont à l'état 0 et la porte PO14 est à l'état 1 : cette dernière met par le fil r1 l'eb ES du signal incident à 1 durant la sélection des entrées r du multiplexeur MAA contrôlée par A = 1.

b) Signal trifréquence.

Les entrées ei et ej sont toutes deux à l'état 1. L'entrée q0 est à l'état 0. Les portes PE11 et PE12 sont à l'état 0 et la porte PO14 à l'état 1 met par le fil r1 l'eb ES de SIN à l'état 1 comme vu ci-dessus.

c) Signal bifréquence hors code.

Les entrées ei et ej sont respectivement à 1 et 0 (bifréquence) et l'entrée q0 est à 1 (bifréquence hors code). Les portes PE11, PE12 et PO14 sont respectivement à l'état 1 et le fil r1 met l'eb ES à 1 comme dans les cas a et b.

Elaboration du type de séquence :

Le type de séquence TS est un mot codé de 3 eb résultant de la comparaison entre trois signaux numériques utilisés pour contrôler l'état de chaque voie temporelle, à savoir :

le signal incident SIN d'une part indiquant l'état d'occupation de la voie temporelle dès la présence d'une signalisation fonctionnelle ou anormale sur ladite voie et d'autre part précisant son contenu ;

le signal en cours de confirmation SCC, c'est-à-dire un signal incident mémorisé et relu à chaque IT affecté à une même voie pendant la temporisation nécessaire au contrôle de la durée de la signalisation présente sur cette voie ;

le signal confirmé précédemment SCP, c'est-à-dire antérieurement au signal incident.

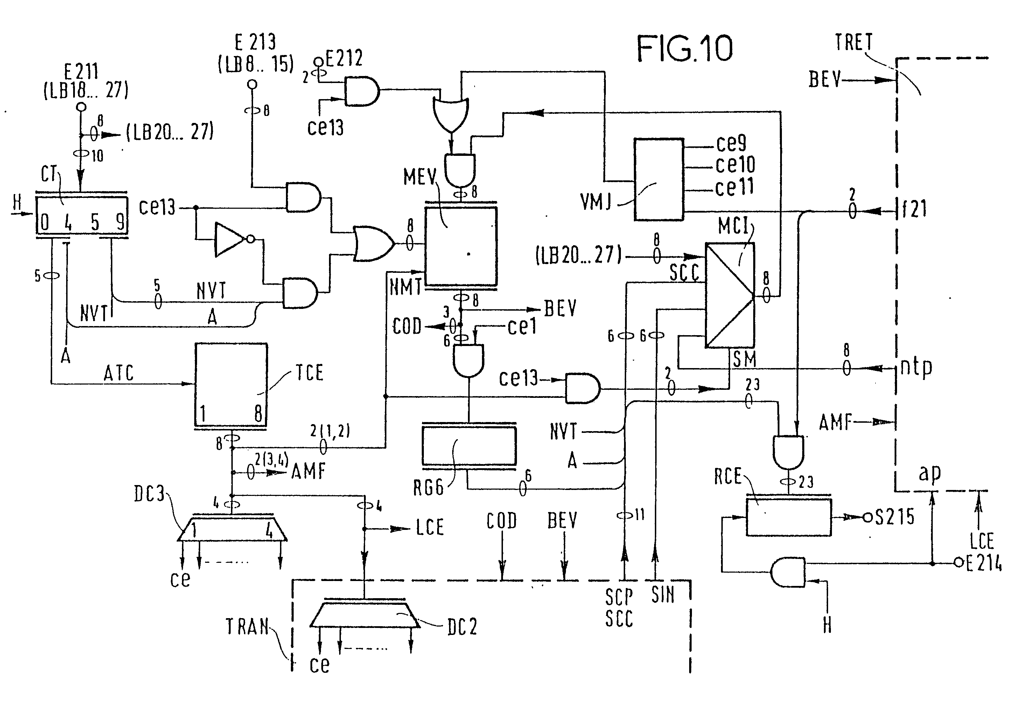

Les signaux SCC et SCP sont consignés temporairement dans une mémoire d'états de voies MEV située dans la logique TREV (figure 10) comme on le verra par la suite.

Le type de séquence TS résulte d'un codage de la relation physique liant les données relatives à l'état des voies, lesdites données étant consignées dans les trois signaux SCP, SCC et SIN.

On distingue six types de séquences indiqués par le tableau 1 dans lequel la présence ou l'absence de signal est indiquée par 1 ou 0, les lettres permettant de distinguer les états représentatifs de la présence dans les signaux SCP, SCC et SIN de fréquences différentes (dans le cas fonctionnel) ou de catégories de signaux différents (dans le cas anormal).

(Voir tableau page 6)

Tableau 1

| SCP | SCC | SIN | TS |
|-----|-----|-----|-----|
| 0 | 0 | 0 | 1 |
| 0 | 0 | 1 | 2 |
| 0 | 1 | 0 | 3 |
| 0 | 1 | 1 | 4 |
| 0 | 1A | 1B | 5 |
| 1 | 0 | 0 | 6 |

Type de séquence 1 : signal constant ou absence de signal.

Type de séquence 2 : apparition ou disparition d'un signal faisant suite à un état stable.

Type de séquence 3 : présence d'un état transitoire (signal parasite).

Type de séquence 4 : période de confirmation de l'apparition d'un signal.

Type de séquence 5 : cas de trois signaux contenant des fréquences différentes.

Les types de séquences 4 et 6 sont en fait des périodes respectives pendant lesquelles on confirme l'apparition ou la disparition d'un signal à un stade ultérieur à celui du type de séquence 2.

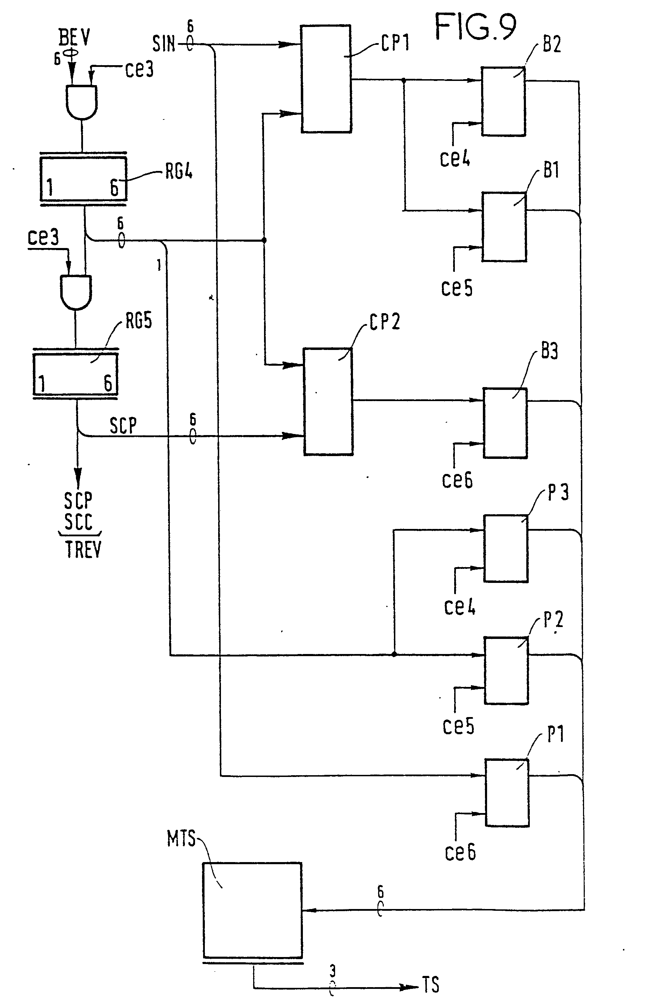

Les circuits d'élaboration du type de séquence sont représentés figure 9.

Le signal SCP issu de la mémoire d'états de voies MEV est stocké dans un registre RG5 via un registre RG4. Il est suivi du signal SCC qui reste stocké dans le registre RG4.

Durant le transit du signal SCP dans le registre RG4, SCP est comparé à SIN par un comparateur CP1.

Si le signal incident est identique au signal confirmé précédemment (SIN = SCP), le résultat correct de la comparaison est mémorisé par une bascule B2.

Le signal SCC est ensuite comparé simultanément à SIN et SCP via les comparateurs respectifs CP1, CP2.

Si SIN = SCC, une bascule B1 est positionnée via le comparateur CP1.

Si au contraire SCC = SCP, la bascule B3 est positionnée via le comparateur CP2.

Une bascule P1 dont l'entrée de données est reliée au fil de sortie 1 du multiplexeur-aiguilleur d'analyse MAA détecte et mémorise la présence de l'élément binaire ES = 1 dans la structure du signal incident fonctionnel ou anormal.

Deux autres bascules P2, P3 ont leur entrée de données reliées en point commun à la sortie 1 du registre RG4: Elles jouent un rôle analogue à celui de la bascule P1 relativement aux signaux SSS et SCP.

La logique de traitement de l'état des voies TREV est représentée figure 10. Elle comprend en partie une mémoire morte et une mémoire vive. La mémoire morte ou table de commandes élémentaires TCE est adressée par le champ ATC du compteur de temps CT qui délivre les numéros d'instants élémentaires w. La table de commandes élémentaires TCE a une capacité de 32 mots de 8 eb.

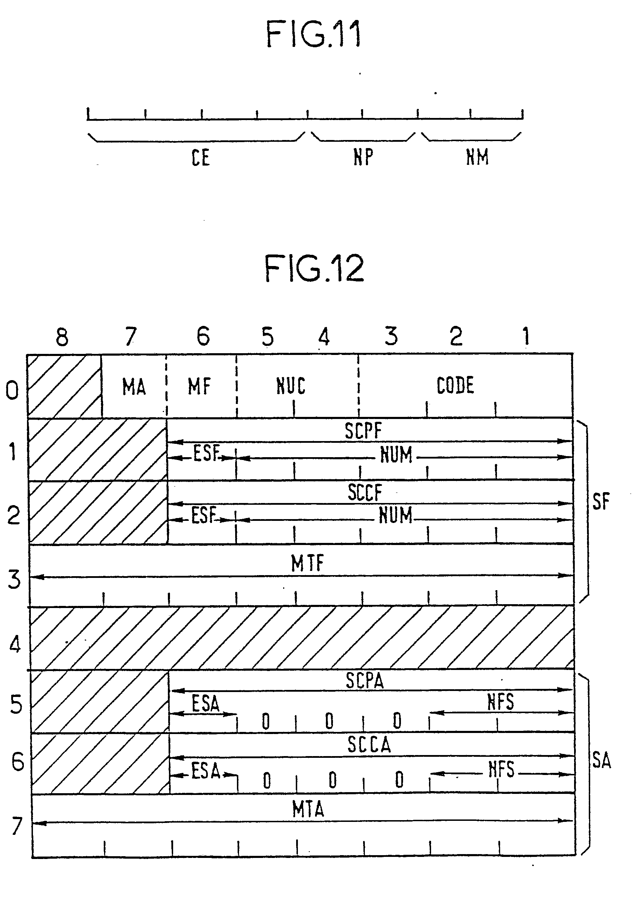

Le format d'un mot de la table TCE est donné figure 11. 4 eb désignent la commande élémentaire CE à effectuer, 2 eb désignent le numéro de mot NM de la mémoire vive associée et 2 autres eb désignent le numéro de page NP d'une mémoire morte MF de la logique TRET délivrant des mots de fonctions sur adressage de paramètres fournis par les logiques TRAN et TREV. Cette mémoire MF est constituée en fait de deux mémoires MF1 et MF2, les mots de lecture de la première étant utilisés pour l'adressage de la seconde.

La mémoire vive dont les mots sont adressés par la table TCE est intitulée mémoire d'état des voies MEV (figure 10) car elle contient toutes les données relatives à l'état des voies sous forme de mots de 8 eb. La mémoire MEV possède 32 pages de 8 mots de 8 eb, les données affectées à une même voie étant regroupées par page.

La figure 12 donne la structure d'une page de la mémoire d'état des voies MEV. Les chiffres horizontaux donnent le rang des e.b. constituant les mots et les chiffres verticaux indiquent le rang des mots dans la page. Le mot 0 est réservé aux informations relatives à l'unité de commande UC et transmises via l'unité d'échange, à savoir :

MA : masque d'état anormal (1 eb)

MF : masque d'état fonctionnel (1 eb)

NUC : N° de l'unité de commande (2 eb)

COD : désignation du code de fréquences utilisé (3 eb).

Les mots 1 à 3 (6 eb) sont réservés aux signaux fonctionnels SF et les mots 5 à 7 aux signaux anormaux SA.

Les mots 1 et 5 (6 eb) sont relatifs à la structure du signal confirmé précédemment SCP. Les mots 2 et 6 sont relatifs à la structure du signal en cours de confirmation SCC. Les mots 3 et 7 (8 eb) sont des mots de temporisation MTF et MTA servant à confirmer respectivement un signal en cours de confirmation SCC fonctionnel ou anormal.

La structure des signaux fonctionnels SCPF et SCCF est analogue à celle d'un signal incident (figure

6

6). L'élément binaire ESF indique la présence d'un signal fonctionnel, et ESA indique la présence d'un signal anormal.

La table de commandes élémentaires TCE délivre en lecture les commandes élémentaires ce nécessaires au fonctionnement des logiques TRAN, TREV et TRET, par l'intermédiaire des décodeurs respectifs DC2, DC3, DC4.

La mémoire d'états de voies MEV est adressée par le champ NVT du compteur de temps CT désignant un numéro de voie temporelle et, en conséquence, une page correspondante de ladite mémoire. L'élément binaire A désigne la partie SF ou SA de la page relative aux signaux fonctionnels ou anormaux et le champ NMT délivré par la table TCE désigne le numéro de mot dans la demi-page SF ou SA.

Sur ordre de la commande élémentaire ce1, le mot 0 de la page est stocké dans un registre RG6, à savoir le ou les eb de masques (MA, MF) des zones SA, SF, le numéro de l'unité de commande (NUC) et le type de code de signalisation utilisé (COD), par exemple code R2, code bifréquence, code clavier. Le type de code est également transféré dans le registre RG2 de la logique TRAN. La logique TRAN élabore le signal SIN en fonction du code et des deux énergies E1, E2 et le transfert en écriture dans la mémoire d'états de voies MEV via un multiplexeur MCI centralisateur des informations à écrire, l'adressage étant réalisé en fonction du numéro de mot communiqué par la table TCE. Le signal en cours de confirmation SCC, en transit dans la logique TRAN pour l'élaboration, du type de séquence TS (figure 9), est réinscrit de façon analogue en mémoire MEV via MCI. La mise à jour en mémoire MEV des états (ES) des signaux SCC et SIN est effectuée au moyen d'un codage de fonctions F2 élaboré par la logique TRET. La validation des mises à jour s'effectue par l'intermédiaire d'un circuit VMJ sur ordre des commandes élémentaires ce9 à ce11.

La logique TRET élabore également un nouveau mot de temporisation NTP permettant de déterminer la durée de confirmation des signaux SCC. Ce mot NTP est inscrit en mémoire MEV pour mise à jour par l'intermédiaire du multiplexeur MCI de façon analogue à la mise à jour des états des signaux SCC et SIN.

L'intervention de l'unité de commande UC pour une écriture en mémoire d'états de voies MEV s'effectue sur ordre d'une commande élémentaire ce13 qui force l'adresse du multiplexeur MCI à zéro. Ceci autorise le transfert des informations, en provenance de l'unité d'échange et présentes sur les liaisons banalisées LB 20 à 27 de l'entrée E211, sur les entrées d'écriture de la mémoire MEV via le multiplexeur MCI. L'écriture du masquage des états fonctionnels ou anormaux est réalisée via l'entrée E212 durant la commande élémentaire ce13. Ladite commande valide en outre l'entrée E213 pour l'adressage en lecture de la mémoire MEV par l'unité d'échange UE.

Le registre de changement d'état RCE est validé en écriture par un eb du code de fonction F2 élaboré par la logique TRET. Il reçoit les informations permettant de déterminer qu'un changement d'état a eu lieu sur une voie. Ce sont :

— le numéro de voie sur laquelle le changement d'état est détecté (liaisons NVT en provenance du compteur de temps CT) ;

— l'indication d'un état fonctionnel ou anormal (liaison A du compteur de temps) ;

— le code de signalisation utilisé ;
— le masque des états anormaux ;          } en tampon dans RG6
— le numéro de l'unité de commande vers laquelle
doit être transmis le changement d'état ;

— l'ancien état déterminé par le signal confirmé précédemment SCP ;
— le nouvel état déterminé par le signal en cours de confirmation SCC.

Le contenu du registre à décalage RCE est transmis en série à l'unité d'échange UE par la sortie S215 à la demande de ladite unité présentant un signal d'appel sur l'entrée E214. Cet appel est répercuté dans la logique TRET par la liaison ap.

Les informations issues de la mémoire MEV donnant l'état des voies sont transmises à la logique de traitement et temporisation TRET par des liaisons BEV.

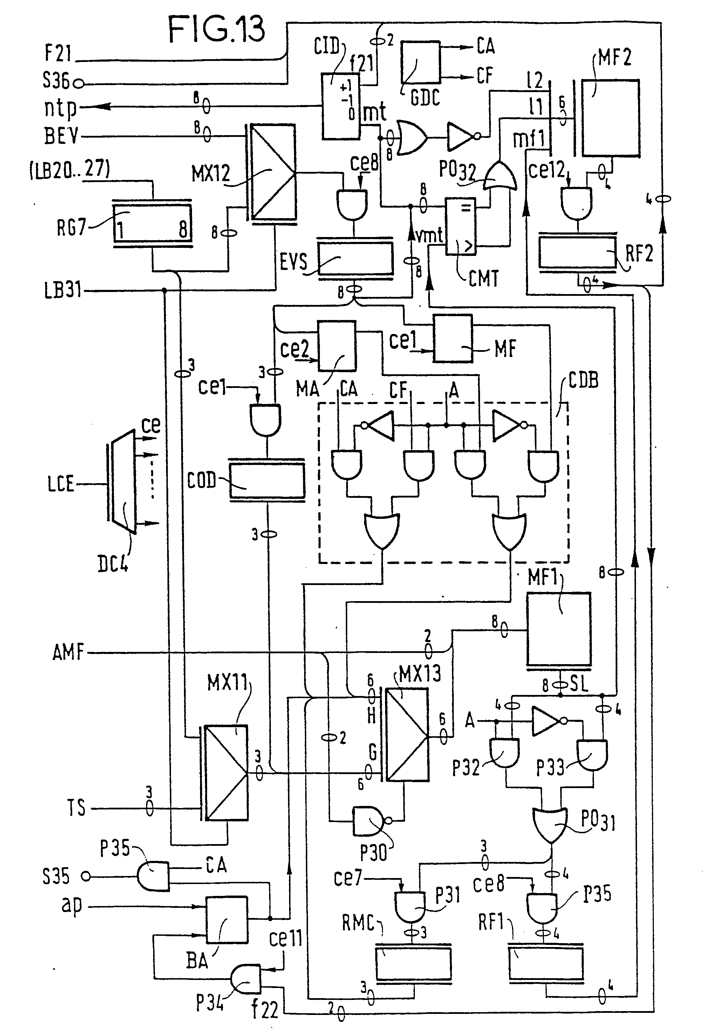

La logique de traitement et temporisation (TRET) est représentée figure 13. Elle permet à partir du type de séquence TS et du code de signalisation auquel la voie est assujettie, d'entreprendre la phase finale du traitement en confirmation de l'état de ladite voie. Cette phase finale de traitement permet de déterminer s'il faut :

faire évoluer les états (ES) des signaux SCC et SCP ;

faire évoluer le mot de temporisation ;

charger le registre de changement d'état.

La décision d'entreprendre l'une ou l'autre de ces opérations est conditionnée par certains paramètres, à savoir :

— l'état d'une came fonctionnelle CF ou anormale CA ;
— l'état d'un masque fonctionnel MF ou anormal MA ;
— l'état d'une bascule d'appel BA ;
— l'état d'un mot de temporisation fonctionnel MTF ou anormal MTA.

Les cames fonctionnelles CF et anormales CA sont issues d'un générateur de cames GDC élaborant des créneaux de même durée mais de période différentes.

Les signaux fonctionnels et anormaux sont confirmés séparément en fonction de l'état logique de l'e.b. A du compteur de temps de façon à appliquer une temporisation différente selon que l'on est en présence d'un signal fonctionnel ou anormal. En effet, il n'est pas nécessaire de confirmer les signaux anormaux aussi vite que les signaux fonctionnels. Cette confirmation est réalisée par incrémentation du mot de temporisation consigné dans la mémoire d'état de voie MEV.

L'exploration d'une voie dans une trame a lieu toutes les 500 microsecondes (32 voies à traiter et une durée de traitement de 4 IT par voie, soit 4 × 3,9 microsecondes). Le mot de temporisation MT ayant une capacité de 8 e.b. le temps maximum exprimé par le mot de temporisation est de 128 millisecondes (500 microsecondes × $2^8$), l'incrémentation du mot de temporisation ayant lieu à chaque exploration de la voie en traitement.

La période de la came fonctionnelle est de 512 microsecondes. Celle de la came anormale est de 16 millisecondes, les signaux anormaux ne nécessitant pas une confirmation aussi rapide que les signaux fonctionnels. Ces périodes peuvent être ajustées dans une plage entre 1 et 8 par l'effet d'un coefficient multiplicateur obtenu dans le générateur de cames par programmation de résistances.

Pour chaque type de séquence à confirmer on fixe une valeur maximale VMT au mot de temporisation et la durée de la confirmation d'un signal (fonctionnel ou anormal) est obtenue en multipliant la valeur maximale dudit mot par la came (fonctionnelle ou anormale).

Le tableau 2 résume les durées de confirmation obtenues en fonction du code, du type de séquence, de la came et de la temporisation.

Tableau 2

| code | Type de séquence | Came | VMT | Durée de la confirmation |
|---|---|---|---|---|
| Clavier | Apparition d'un signal fonctionnel | 512 ms | 32 | 16 ms |
| Clavier | Disparition d'un signal fonctionnel | 512 ms | 20 | 10 ms |
| R2 – MF | Apparition d'un signal fonctionnel | 512 ms | 100 | 50 ms |
| R2 – MF | Disparition d'un signal fonctionnel | 512 ms | 50 | 25 ms |
| Tous codes | Apparition d'un signal anormal | 16 ms | 128 | 2 048 ms |
| | Disparition d'un signal anormal | 16 ms | 16 | 256 ms |

Les informations sur le type de séquence TS d'une part et sur le code utilisé, d'autre part, permettent d'adresser dans la logique TRET (fig. 13) une mémoire MF1 d'élaboration d'un premier type de fonction F1. Les informations sur le type de séquence issues de la logique TRAN adressent la mémoire MF1 via les liaisons TS et des multiplexeurs MX11 et MX13. Les informations présentes sur les liaisons banalisées LB20 à 27 sont transférées aux multiplexeurs MX11 et MX12 à travers un registre RG7. Les informations sur l'état des voies issues de la logique TREV transitent dans un registre EVS via les liaisons BEV et un multiplexeur MX12. L'information désignant le code de signalisation utilisé est dérivée du registre EVS et « mise en tampon » dans un registre COD pour être combinée à l'information sur le type de séquence reçue à l'entrée du multiplexeur MX13. Les informations obtenues sur le type de séquence TS et le code de signalisation COD permettent d'adresser un mot de commande MC dans la mémoire MF1. Ce mot de commande détermine des actions d'incrémentation, de décrémentation ou de remise à zéro à effectuer sur le mot de temporisation et des actions de mise à jour à effectuer sur les signaux en cours de confirmation SCC et incident SIN.

Le mot de commande peut être affecté des valeurs 0 à 6 (en binaire), avec les significations suivantes :

MC = 0 : pas d'action
MC = 1 : remise à zéro
MC = 2 : incrémentation
MC = 3 : décrémentation
MC = 5 : mise à jour
MC = 6 : incrémentation

Le tableau 3 donne le codage du mot de commande élaboré dans le circuit d'adressage de la mémoire MF1 en fonction du type de séquence et du code de signalisation :

Le code repos signifie qu'il n'y a pas de code en cours : la voie est au repos.

Tableau 3

| Code TS | Repos | Clavier | R2 avant | R2 arrière | MF bi-fréq. | MF contrôle | |
|---|---|---|---|---|---|---|---|
| 1 | 5 | 0 | 0 | 0 | 0 | 0 | |
| 2 | 5 | 0 | 0 | 0 | 0 | 0 | |
| 3 | 5 | 1 | 3 | 3 | 3 | 3 | |
| 4 | 5 | 2 | 2 | 2 | 2 | 2 | MC |
| 5 | 5 | 1 | 1 | 1 | 1 | 1 | |
| 6 | 5 | 2 | 2 | 2 | 2 | 2 | SF |
| | | 6 | 6 | 6 | 6 | 6 | SA |

TS = 1 : cas d'un signal permanent.

Les trois états ES des signaux SIN, SCC et SCP sont identiques. Il n'y a donc pas d'action (incrémentation, décrémentation) à effectuer sur le mot de temporisation. Par contre le signal en cours de confirmation est mis à jour : SCC = SIN. Le mot de commande agissant sur ce type de séquence est MC = 0 quel que soit le code (repos excepté).

TS = 2 : Cas d'une première apparition ou disparition de signal.

MC = 0 comme dans le cas précédent. En conséquence, pas d'évolution du mot de temporisation et mise à jour SCC = SIN.

TS = 3 : Cas d'un rebondissement de contact clavier, par exemple ou d'un signal transitoire (parasite).

En code clavier, MC = 1 car il y a lieu de confirmer plus rapidement que dans les autres codes. Mise à jour de SCC (SCC = SIN) et remise à zéro du mot de temporisation.

Pour les autres codes, MC = 3 commande la décrémentation du mot de temporisation MT et la mise à jour du signal SCC uniquement lorsque MT = 0.

TS = 4 : C'est la séquence pendant laquelle l'apparition d'un signal est confirmée.

MC = 2 commande l'incrémentation du mot de temporisation MT, la mise à jour du signal SCC (SCC = SIN) et éventuellement celle du signal SCP (SCP = SCC) si le mot MT atteint sa capacité maximale VMT (valeur maximale de temporisation).

TS = 5 : C'est le cas de trois états ES différents, c'est-à-dire de signaux contenant des combinaisons de fréquences différentes. Il y a donc lieu de faire MT = 0 et SCC = SIN. Le mot de commande est par conséquent MC = 1.

TS = 6 : C'est la séquence pendant laquelle on confirme la disparition d'un signal. On distingue la disparition d'un signal fonctionnel (qui est transmise à l'unité de commande UC) de la disparition d'un signal anormal qui n'est pas transmise.

En présence de signal fonctionnel le mot de commande est MC = 2 qui réalise une action identique à celle nécessitée par le type de séquence 4.

En présence de signal anormal le mot de commande MC = 6 précise qu'il ne faut pas transmettre le changement d'état.

9

**0 037 048**

Cas de code repos :

Pour ce code, le mot de commande est le même (MC = 5) quel que soit le type de séquence. Ce mot MC = 5 commande une mise à jour des états ES des signaux SCC = SIN et SCP = SCC ainsi qu'une remise à zéro du mot de temporisation, afin d'éliminer les risques d'événements anormaux lors d'une nouvelle affectation de la voie.

La confirmation d'un changement d'état du signal est donnée après l'élaboration successive de deux fonctions F1, F2, chacune ayant trait, d'une part, à l'évolution de la temporisation et, d'autre part, à la mise à jour de l'état ES du signal en cours de confirmation SCC et du signal confirmé précédemment SCP :

Elaboration d'un mot de fonction F1 de 4 eb (F1T = 2 eb, F1S = 2 eb) tenant compte du mot de commande, et des états de la came, du masque et de la bascule d'appel.

Elaboration d'un mot de fonction F2 de 4 eb (F2T = 2 eb, F2S = 2 eb) défini à partir du mot de fonction F1 et de la valeur du mot de temporisation.

Les mots de commande MC et de fonction F1 sont issus de la mémoire MF1. C'est une mémoire morte de 256 mots de 8 eb organisée en 4 pages de 64 mots. Une page est adressée par 2 eb issus de la table TC2 et transmis sur les liaisons AMF. Lesdites liaisons ont également accès à une porte ET-NON P30 qui permet de sélectionner les entrées G et H du multiplexeur MX13. Les entrées G reçoivent le type de séquence de la sortie du multiplexeur MX11, le code stocké dans le registre COD et l'état d'une bascule d'appel BA délivré par la sortie de ladite bascule. Les entrées H reçoivent, via un registre RMC, le mot de commande MC issu de la mémoire MF1 via un jeu de portes ET P31, un jeu de portes OU PO31 et de portes ET P32 et P33, éventuellement un ordre de masquage issu d'un eb du registre EVS et mémorisé par une bascule MF ou MA selon que le signal traité est fonctionnel ou anormal, et enfin la came fonctionnelle CF ou anormale CA. Le masque et la came sont transmis via un circuit de distribution CDB (constitué de portes ET et de portes OU) de la catégorie fonctionnelle ou anormale du signal, selon l'état de l'eb présent sur la liaison A issue du compteur de temps.

Le mot de fonction F1 est mis en tampon dans un registre RF1.

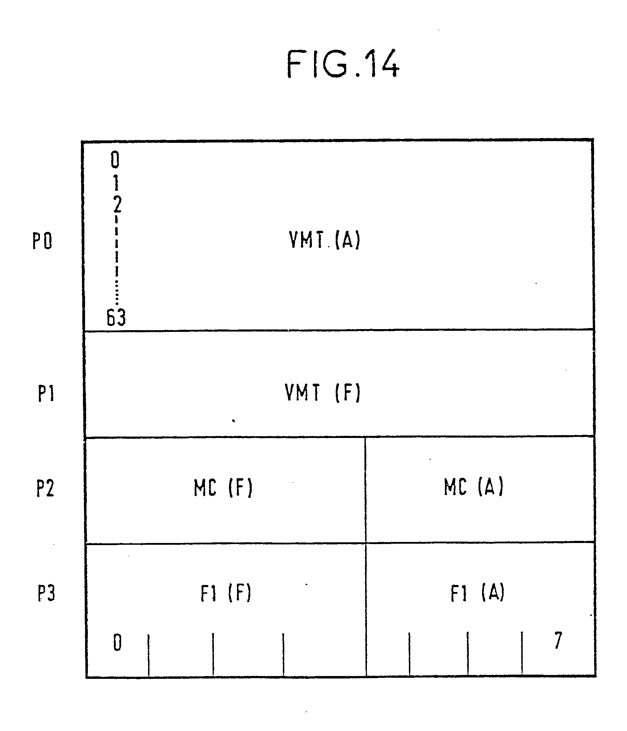

La structure de la mémoire MF1 est donnée figure 14.

Les pages P0 et P1 comportent respectivement les valeurs maximales VMT (A), VMT (F) des mots de temporisation relatifs aux signaux anormaux et fonctionnels.

Les pages P2 et P3 comportent respectivement les mots de commande et de fonction F1, lesdits mots étant dédoublés relativement au type de signal fonctionnel ou anormaux.

Elaboration de F1

Le tableau 4 donne le codage du mot de fonction F1 en fonction du mot de commande MC, de la came C, du masque M et de la bascule d'appel BA. Pour plus de clarté les valeurs de MC, F1T et F1S sont données en décimal, alors qu'elles sont élaborées en code binaire. Les paramètres dont les états sont notés X n'interviennent pas dans le codage du mot F1.

Tableau 4

| MC | C | M | BA | F1T | F1S |
|---|---|---|---|---|---|
| 0 | 0 | X | X | 0 | 2 |
|  | 1 | X | X | 0 | 0 |
| 1 | 0 | X | X | 0 | 2 |
|  | 1 | X | X | 3 | 0 |
| 2 | 0 | X | X | 0 | 2 |
|  | 1 | 1 | X | 1 | 2 |
|  | 1 | 0 | 1 | 1 | 0 |
|  | 1 | 0 | 0 | 1 | 3 |
| 3 | 0 | X | X | 0 | 2 |
|  | 1 | X | X | 2 | 2 |
| 5 | X | X | X | 3 | 1 |
| 6 | 0 | X | X | 0 | 2 |
|  | 1 | X | X | 1 | 1 |

10

La signification du code des fonctions de temporisation F1T ou F2T et des fonctions de signalisation F1S ou F2S est donnée par le tableau 5, MT désignant le contenu « actualisé » du mot de temporisation MT.

Tableau 5

| F1T ou F2T | | | F1S ou F2S | | |
|---|---|---|---|---|---|
| 0 | 00 | MT = MT | 0 | 00 | Mise à jour SCC (SCC = SIN) |
| 1 | 01 | MT = MT + 1 | 1 | 01 | Mise à jour SCC et SCP (SCP = SCC) |
| 2 | 10 | MT = MT - 1 | 2 | 10 | Pas de mise à jour |
| 3 | 11 | MT = 0 | 3 | 11 | Mise à jour SCC et SCP et positionnement de la bascule d'appel |

La prise en compte de la valeur du mot de temporisation et de l'exécution des mises à jour se fait au niveau de la fonction F2.

Le mot de fonction F2 est extrait d'une mémoire morte MF2 de 64 mots de 4 e.b. adressée par le mot mf1 issu de la mémoire MF1 via un registre RF1, un jeu de portes ET P35 et les jeux de portes PO31, P32, P33, par une information MT ⩾ VMT (liaison I1) issue d'un comparateur de mot de temporisation CMT à travers une porte OU PO32 ou par une information MT = 0 (liaison 12), le mot de temporisation étant extrait du registre EVS et sa valeur étant comparée à la valeur maximale VMT qui lui est affectée (liaisons VMT d'entrée de CMT issues des sorties de lecture SL de la mémoire MF1).

Le mot de temporisation MT stocké dans le registre EVS est transféré dans un registre-compteur CID par des liaisons d'entrée mt, ledit transfert étant effectué sous le contrôle d'un mot de fonction F2 issu du registre RF2 (liaisons d'entrée f21 de CID), ledit mot de fonction F2 effectuant d'une part, selon le cas, l'incrémentation, la décrémentation ou la mise à zéro du compteur CID, donc du mot de temporisation et, d'autre part, la validation de la mise à jour dudit mot dans la mémoire d'état de voies MEV (fig. 10).

Le nouveau mot de temporisation, issu des liaisons de sortie ntp du compteur CID, est écrit dans la mémoire MEV via le multiplexeur MCI de la logique de traitement de l'état des voies. Le demi-mot de fonction F2S est également transmis sur une porte ET P34 (liaisons d'entrée f22) afin de commander la remise au repos de la bascule d'appel BA : cette bascule est venue au travail après un test positif de la sortie S215 du registre de changement d'état RCE effectué par l'unité d'échange UE qui en donne le transfert en mode série par un signal d'appel présenté sur l'entrée E214 de la logique TREV, ce signal étant représenté sur l'entrée de BA par la liaison ap. La bascule BA mémorise l'appel effectué par l'unité d'échange. Si cette dernière ne transmet pas le signal de remise au repos de BA après avoir reçu le contenu du registre RCE, ladite unité en est informée par la came anormale CA transmise sur la sortie S35 via une porte ET P35 contrôlée par ladite bascule.

Elaboration et action de F2.

La fonction F2 code la décision finale à prendre pour la mise à jour des états des signaux SCC et SCP et la nouvelle valeur à donner au mot de temporisation.

Le tableau 6 donne le codage de F2 en considération de F1 et des valeurs maximales ou nulles du mot de temporisation.

Les paramètres dont les états sont notés X n'interviennent pas dans l'élaboration de F2.

La signification du codage adopté pour F2T et F2S est identique à celle donnée pour F1T et F1S au tableau 5.

(Voir tableau 6 page 12)

## Tableau 6

| F1T | F1S | MT ≥ VMT | MT = 0 | | F2T | F2S |
|---|---|---|---|---|---|---|
| 0 | 0 | X | X | 0 | MT | 0 |
| 0 | 2 | X | X | 0 | MT | 2 |
| 1 | 0 | 0 (non) | X | 1 | MT + 1 | 0 |
| 1 | 0 | 1 (oui) | X | 0 | MT      VMT | 0 |
| 1 | 1 | 0 (non) | X | 1 | MT + 1 | 0 |
| 1 | 1 | 1 (oui) | X | 3 | 0 | 1 |
| 1 | 3 | 0 (non) | X | 1 | MT + 1 | 0 |
| 1 | 3 | 1 (oui) | X | 3 | 0 | 3 |
| 2 | 2 | X | 0 | 2 | MT − 1 | 2 |
| 2 | 2 | X | 1 | 3 | 0 | 0 |
| 3 | 0 | X | X | 3 | 0 | 0 |
| 3 | 1 | X | X | 3 | 0 | 1 |

Interprétation des tableaux 4 et 6 :

Pour MC = 2, par exemple (tableau 4), tant que l'impulsion de came n'apparaît pas (C = 0), on a F1T = 0 et F1S = 2, c'est-à-dire que la valeur du mot de temporisation reste inchangée et qu'il n'y a pas de mise à jour de l'état du signal. Ceci est également valable pour F2 (tableau 6).

Lorsque la came survient (C = 1), il y a incrémentation du mot de temporisation (F1T = 1) et mise à jour des signaux SCC et SCP (alignement de l'état ES de SCC sur celui de SIN et de l'état ES de SCP sur celui de SCC).

Tant que le mot de temporisation MT n'atteint pas sa valeur maximale VMT, il n'y a pas lieu de tenir compte de l'état du masque et de la bascule d'appel. Pour MT < VMT, c'est-à-dire que l'inéquation MT ≥ VMT est infirmée par un eb d'état logique 0, la relation F1T = 1, F1S = 1 et (non) donne F2T = 1 (incrémentation de MT) et F2S = 0 (mise à jour de SCC). Lorsque MT atteint VMT, le signal est confirmé : à ce stade, il faut cependant tenir compte de l'état du masque et de la bascule d'appel.

— Si la voie est masquée, le changement d'état n'est pas transmis à l'unité de commande UC mais il est nécessaire d'effectuer les mises à jour en mémoire d'état afin de repartir sur une configuration correcte lors du démasquage de la voie. Donc, quand M = 1, le tableau 4 donne F1S = 1. Pour F1S = 1 et l'inéquation MT ≥ VMT confirmée par un eb d'état 1, le tableau 6 donne F2S = 1 qui autorise les mises à jour de SCC et de SCP et F2T = 3 qui autorise la remise à zéro du mot de temporisation puisque le nouvel état ES du signal SCP vient d'être confirmé.

On peut noter que le codage de F1 est identique pour MC = 6 (disparition d'un signal anormal) où il faut agir de la même façon que dans le cas d'une voie masquée.

Si la voie n'est pas masquée mais que la bascule d'appel est positionnée (BA = 1), il faut garder en attente l'événement confirmé : en effet, cette bascule a été mise à 1 lors du test positif de la sortie S215 du registre de changement d'état RCE effectué par l'unité d'échange UE.

Pour BA = 1, le tableau 4 donne F1S = 0.

Pour F1S = 0 et MT ≥ VMT, le tableau 6 donne F2S = 0 qui autorise la mise à jour de SCC et F2T = 0 qui permet de préserver la valeur du mot de temporisation, donc de conserver celui-ci à sa valeur VMT.

En fin de réception du message du registre RCE, l'unité d'échange UE présente un nouveau signal sur l'entrée E214 ce qui a pour but de repositionner la bascule d'appel BA à son état de repos initial (sortie de BA à l'état 0). Pour BA = 0, le tableau 4 donne F1S = 3. Comme la valeur du mot de temporisation a été préservée tant que la bascule d'appel était au travail, l'inéquation MT ≥ VMT est confirmée (oui) et le tableau 7 indique en corrélation F2S = 3 qui autorise comme pour F2S = 1 la mise à jour de SCC et SCP mais indique en plus qu'il faut positionner la bascule d'appel et charger le registre de changement d'état RCE.

D'autre part, F2T = 0 autorise la remise à zéro du mot de temporisation puisque le nouvel état du signal SCP vient d'être confirmé.

Les transferts de données et d'ordres sont distribués sous contrôle de portes validées par les commandes élémentaires ce délivrées par le décodeur DC4.

Les informations fournies par les mots de fonction F2 sont transmises à l'unité de commande UC, via l'unité d'échange UE, par la sortie S36 de la logique TRET.

**Revendications**

1. Dispositif de confirmation (DCS) de signaux numériques issus d'un récepteur numérique de fréquences (RNF) qui équipe un central téléphonique à commutation temporelle et à commande centralisée par calculateur (UC), qui est constitué d'un groupe de récepteurs élémentaires par trame, dans lequel chaque récepteur élémentaire dessert une voie temporelle et dont les circuits de sortie dudit récepteur (RNF) sont reliés au dispositif de confirmation (DCS) inséré entre ces circuits de sortie et des circuits d'entrées/sorties (UE) du calculateur (UC), ledit dispositif étant caractérisé en ce qu'il comporte trois logiques interconnectées qui sont respectivement :

une logique de transcodage (TRAN) de signaux numériques de fréquences, assurant la mise en tampon des informations issues du récepteur numérique de fréquence ainsi que l'élaboration d'un signal dit incident significatif du type des signaux numériques ;

une logique de traitement de l'état des voies (TREV) assurant le traitement d'interventions internes, telles que sélection de page et de mot d'une mémoire d'état de voie (MEV), écriture ou lecture des signaux d'état en mémoire, ou externes, telles que prise ou libération d'une voie par l'unité de commande ;

une logique de traitement et temporisation (TRET) assurant la détermination et l'enchaînement des étapes de la confirmation du signal.

2. Dispositif selon la revendication 1, caractérisé par le fait que la logique de transcodage (TRAN) de signaux numériques de fréquences, comporte des moyens de collationnement (PO, MRD) des signaux de sortie du récepteur numérique de fréquences (RNF), des moyens de transcodage (MTC), d'analyse (ANA) et de sélection multiplex (MAA) desdits signaux en signaux incidents (SIN) fonctionnels ou anormaux et des moyens (CP, B, P, MTS) d'élaboration de types de séquences (TS) relatifs à l'apparition, la disparition ou la présence du signal, que la logique de traitement de l'état des voies temporelles (TREV) comporte des moyens synchronisés (CT, TCE, DC3) d'élaboration de commandes élémentaires (ce) aux trois logiques et de mémorisation (MEV) des structures numériques des signaux fonctionnels et anormaux d'un mot de temporisation « actualisé   affecté au signal fonctionnel ou anormal en cours de confirmation, d'informations fournies par l'unité de commande dupliquée (UC) sur le type de code utilisé, le numéro du calculateur et le masquage éventuel dudit signal fonctionnel ou anormal, des moyens de stockage et de transfert (RCE), vers l'unité de commande en fin de confirmation d'un signal, d'informations relatives à un éventuel changement de la structure numérique dudit signal et que la logique de traitement et temporisation (TRET) comporte des moyens corrélatifs (MF1, COD, RMC) de mise à jour d'une part, des structures numériques des signaux de voies mémorisés dans la logique de traitement de l'état des voies, d'autre part des temporisations de confirmation affectées auxdits signaux.

3. Dispositif selon la revendication 2, caractérisé par le fait que les moyens de collationnement des signaux de sortie du récepteur numérique de fréquences sont constitués d'un circuit pyramidal à portes OU attaquant les entrées d'écriture d'une mémoire réductrice de débit (MRD), ledit circuit comprenant, d'une part, une paire de portes (PO1, PO2) à deux entrées dont une commune permettant de recevoir sur chaque entrée un signal bifréquences (PBI), trifréquences (PTR) ou monofréquence (PMO), d'autre part, un groupe de portes OU (PO3) recueillant le signal fonctionnel (bifréquence) ou anormal (trifréquence ou monofréquence) ainsi que les deux signaux d'énergies les plus élevées (E1, E2) issus d'un récepteur élémentaire, ladite mémoire (MRD) étant adressée en partage de temps par des champs différents d'un compteur cyclique de temps (CT) désignant un numéro de voie temporelle (NVT) et un numéro d'intervalle de temps (NIT) de ladite voie.

4. Dispositif selon les revendications 2 et 3, caractérisé par le fait que le transcodage des signaux numériques de fréquence en signaux incidents fonctionnels ou anormaux est effectué par une mémoire de transcodage programmable (MTC) adressée par les informations de lecture de la mémoire réductrice de débit (MRD), combinées à une information de l'unité de commande donnant le code de signalisation dans lequel est transmis le signal numérique de fréquences.

5. Dispositif selon les revendications 2 et 4, caractérisé par le fait qu'un circuit d'analyse (ANA) permet de cataloguer comme étant anormal un signal bifréquences lorsque celui-ci est transmis dans un autre code signalisation que celui qui lui est imparti (bifréquences hors code), ledit circuit d'analyse comportant une première porte ET (PE11) recevant de la mémoire réductrice de débit (MRD) une information significative de la présence d'un signal numérique de fréquence, une seconde porte ET (PE12) étant contrôlée par la première porte et recevant de la mémoire de transcodage (MTC) une information significative du code de signalisation en cours, une troisième porte OU (PE14) étant contrôlée par la seconde porte (PE12) et par une entrée de la première porte (PE11), ledit circuit comportant six sorties dont la première (r1) est celle de la troisième porte, les trois suivantes (r2 à r4) étant figées à un état logique 0 permanent et les deux dernières (r5, r6) étant reliées respectivement aux deux entrées (ei, ej), de la première porte de manière à élaborer la structure numérique d'un signal anormal lorsque celui-ci est un signal bifréquences hors code.

6. Dispositif selon les revendications 2, 4 et 5, caractérisé par le fait que la structure numérique d'un signal fonctionnel (bi-fréquence adapté au code) ou anormal (mono ou tri-fréquences) délivré par la mémoire de transcodage (MTC) ou celle d'un signal anormal (bifréquences hors code) délivré par le circuit d'analyse (ANA) est d'un format identique, ledit format comportant un premier élément binaire (ES)

0 037 048

indiquant l'état fonctionnel ou anormal du signal, les cinq eb suivants d'un signal fonctionnel indiquant l'information véhiculée par ledit signal et les deux derniers eb d'un signal anormal désignant le nombre de fréquences composites dudit signal, ladite structure numérique fonctionnelle ou anormale reçue sur les entrées (q, r) d'un multiplexeur (MAA) et sélectionnée en sortie par un eb du compteur de temps (CT) constituant un signal incident (SIN).

7. Dispositif selon les revendications 2 et 3, comportant des moyens synchronisés de distribution de commandes élémentaires aux logiques et de mémorisation et mise à jour des signaux fonctionnels et anormaux caractérisé par le fait que lesdits moyens comportent une mémoire ou table de commandes élémentaires (TCE) adressée par les poids faibles (ATC) du champ d'éléments binaires du compteur de temps (CT) et une mémoire d'états de voies (MEV) consignant les signaux fonctionnels et anormaux indicateurs de l'état fonctionnel ou anormal desdites voies, le nombre de pages de ladite mémoire correspondant au nombre de voies d'une trame, chaque page comprenant deux zones (SF, SA) de mots fonctionnels et anormaux relatifs aux signaux en cours de confirmation (SCC) et à ceux confirmés précédemment (SCP), les pages de la mémoire d'états de voies (MEV) étant adressées par les poids forts du champ (NVT) du compteur de temps désignant le numéro de la voie, la zone de page relative aux signaux fonctionnels ou anormaux étant adressée par l'eb (A) de poids le plus élevé de l'adressage (ATC) de la table de commandes élémentaires (TCE), ladite table distribuant des commandes séquentielles à chaque logique et adressant un mot de la mémoire d'états de voies (MEV).

8. Dispositif selon les revendications 2 et 7, caractérisé par le fait que le signal incident fonctionnel ou anormal est inscrit en mémoire d'états de voies (MEV) et mis à jour au cours du temps de confirmation qui lui est imparti (signal en cours de confirmation SCC), le signal confirmé précédemment (SCP) étant réinscrit en fin de confirmation, lesdits signaux (SIN, SCC, SCP) et un mot de temporisation (MTF, MTA) selon leur état fonctionnel ou anormal étant inscrits et (ou) réinscrits en mémoire d'états de voies (MEV) via un multiplexeur centralisateur (MCI) dont les entrées sont sélectionnées par l'adresse du mot de ladite mémoire.

**Claims**

1. A circuit (DCS) for confirming digital signals delivered by a digital frequency receiver (RNF) in a time division telephone exchange having a centralized control by a computer (UC), said receiver being constituted by a group of elementary receivers per frame, with each elementary receiver serving one time channel and the output circuit of said receiver being connected to the confirmation device (DCS) located between said output circuit and the input/output circuits (UE) of the computer (UC), characterized in that the device comprises three interconnected logic circuits, namely :

a transcoder logic circuit (TRAN) for transcoding digital frequency signals and serving to buffer informations from the digital frequency receiver and to generate a signal called indicent signal which is indicative of the type of digital signals,

a logic circuit for treating the state of the channels (TREV) and ensuring the handling of internal interventions such as the selection of page and of the word in a memory, for external interventions such as the seizure and release of a channel by the control unit ;

a logic circuit for treating and buffering (TRET) and ensuring the determination and the chaining of the stages of the signal confirmation.

2. A device according to claim 1, characterized in that the logic circuit (TRAN) for transcoding digital frequency signals comprises means (PO, MRD) for collating the output signals of the digital frequency receiver (RNF), means (MTC) for transcoding, analyser means (ANA) and multiplex selection means (MMA) or selecting said signals into functional or abnormal incident signals (SIN), and means (CP, B, P, MTS) for generating types of sequences (TS) concerning the appearance, the disappearance or the presence of the signals, that the logic circuit for treating the state of the time channels (TREV) comprises synchronized means (CT, TCE, DC3) for generating elementary commands (ce) for the three logic circuits and means (MEV) for memorizing the digital structures of the functional or abnormal signals of an updated buffer word attributed to the functional or abnormal signal during the confirmation, of informations delivered by the duplicated control unit (UC) relating to the type of code used, the number of the computer and the possible masking of said functional or abnormal signal, the logic circuit (TREV) further comprising means for storing and transferring (RCE) informations relating to a possible change of digital structure of said signal to the control unit at the end of the confirmation of a signal, and that the logic circuit for treating and buffering (TRET) comprises correlating means (MF1, COD, RMC) for updating on the one hand the digital structures of the channel signals stored in the logic circuit for treating the state of the channels and on the other hand for updating the confirmation buffering relating to said signals.

3. A device according to claim 2, characterized in that the means for collating the output signals of the digital frequency receiver consist of a pyramid arrangement of OR gates connected to the write inputs of a data rate reducing memory (MRD), said arrangement comprising on the one hand a pair of gates with two inputs (PO1, PO2) with one input shared, allowing to receive on each input a signal indicating two frequencies (PBI), three frequencies (PTR) or one frequency (PMO), and on the other hand a group of OR

14

gates (PO3) for collecting the functional signal (two frequencies) or the abnormal signal (one frequency or three frequencies) together with the two signals (E1, E2) of the highest energy level received from an elementary receiver, said memory (MRD) being addressed in a time sharing mode by different fields of a cyclic time counter (CT) designating a number of a time channel (NVT) and a number (NIT) of a time interval within said channel.

4. A device according to claims 2 and 3, characterized in that the digital frequency signals are transcoded into functional or abnormal incident signals by a programmable transcoding memory (MTC) which is addressed by the read informations of the data rate reducing memory (MRD) together with an information from the control unit indicating the signalling code in which the digital frequency signal is transmitted.

5. A device according to claims 2 and 4, characterized in that an analysis circuit (ANA) is conceived to label a two-frequency signal as abnormal, if this signal is transmitted in another signalling code than the allowed code (two frequencies out of code), said analysis circuit comprising a first AND gate (PE11) receiving an information from the rate reducing memory (MRD) indicative of the presence of a digital frequency signal, a second AND gate (PE12) being controlled by the first gate and receiving an information from the transcoding memory (MTC) indicative of the actual signalling code, a third OR gate (PO14) being controlled by the second gate (PE12) and by one input of the first gate (PE11), said circuits comprising six outputs, the first one (r1) being the output of the third gate, the following three outputs (r2 to r4) being permanently held at the logic state « 0 » and the last two outputs (r5, r6) being connected respectively to one of two inputs (ei, ej) of the first gate in such a manner as to generate the digital structure of an abnormal signal, if this signal is a two-frequency signal outside the allowed code.

6. A device according to claims 2, 4 and 5, characterized in that the digital structure of a functional signal (two frequencies according to the code) or of a an abnormal signal (one-frequency or three-frequency signals) delivered by the transcoding memory (MTC) or the structure of an abnormal signal (two frequencies outside the allowed code) delivered by the analysis circuit (ANA) are of identical format, said format comprising a first bit (ES) indicating the functional or abnormal state of the signal, the following five bits of a functional signal indicating the information transferred by said signal and the last two bits of an abnormal signal indicating the number of composite frequencies of said signal, said functional or abnormal digital structure, which has been received via the inputs (q, r) of a multiplexer (MAA) and selected at the output side by a bit of the time counter (CT) constituting an incident signal (SIN).

7. A device according to claims 2 and 3, comprising synchronized means for distributing elementary commands to the logic circuits and memorization and updating means for the functional and abnormal signals, characterized in that said means comprise a memory or table of elementary commands (TCE) addressed by the least significant bits (ATC) of the bits field of the time counter (CT), and a channel state memory (MEV) for storing the functional and abnormal signals indicative of the functional or abnormal state of said channels, the number of pages of said memory corresponding to the number of channels of one frame, each page comprising two zones (SF, SA) of functional and abnormal words relating to the signals which are being confirmed (SCC) and to the signals which have previously been confirmed (SCP), the pages of the channel state memory (MEV) being addressed by the most significant bits (NVT) of the time counter designating the channel number, the zone of the page relating to the functional or abnormal signals being addressed by the most significant bit (A) of the address (ATC) of the table of elementary commands (TCE), said table distributing sequential commands to each logic circuit and addressing a word of the channel state memory (MEV).

8. A device according to claims 2 and 7, characterized in that the incident functional or abnormal signal is written into the channel state memory (MEV) and updated during the confirmation period which is allotted thereto (signal being confirmed SCC), the previously confirmed signal (SCP) being rewritten into the memory at the end of confirmation, said signals (SIN, SCC, SCP) and a temporization word (MTF, MTA) according to their functional or abnormal state being written and (or) rewritten in the channel state memory (MEV) via a centralizing multiplexer (MCI) whose inputs are selected by the address of the word in said memory.

**Patentansprüche**

1. Schaltungsanordnung zur Bestätigung digitaler Signale (DCS), die von einem digitalen Frequenzempfänger (RNF) in einem Telefonamt mit Zeitkanaldurchschaltung und mit Zentralsteuerung über Rechner (UC) ausgehen, wobei der Empfänger aus einer Gruppe von Elementarempfängern pro Rahmen besteht und jeder Elementarempfänger einen Zeitkanal betreut, und wobei die Ausgangsschaltkreise des Empfängers (RNF) an die Schaltungsanordnung zur Bestätigung (DCS) angeschlossen sind, die zwischen diese Ausgangsschaltkreise und Eingabe/Ausgabeschaltkreise (UE) des Rechners (UC) eingefügt ist, dadurch gekennzeichnet, daß die Schaltungsanordnung drei miteinander verbundene Logikschaltkreise enthält, nämlich :

eine Transkodierlogik (TRAN) für die digitalen Frequenzsignale, durch die die Pufferung der vom digitalen Frequenzempfänger ausgehenden Informationen sowie die Erzeugung eines « Einfalls- » Signals bewirkt wird, das für die Art der digitalen Signale kennzeichnend ist,

eine Logik zur Bearbeitung des Zustands der Kanäle (TREV), die interne Interventionen abwickelt, wie z. B. die Seitenauswahl und die Wortauswahl aus einem Kanalzustandsspeicher (MEV), sowie das Lesen und Schreiben der Zustandssignale im Speicher, bzw. externe Interventionen wie z. B. die Belegung oder Freigabe eines Kanals durch die Steuereinheit ;

und eine Logik zur Behandlung und Zeitverzögerung (TRET), mit der die Etappen der Bestätigung des Signals bestimmt und in ihrer Abfolge gesteuert werden.

2. Schaltungsanordnung nach Anspruch 1, dadurch gekennzeichnet, daß die Transkodierlogik (TRAN) für die digitalen Frequenzsignale Mittel (PO, MRD) zur Prüfung der Ausgangssignale des digitalen Frequenzempfängers (RNF), Transkodiermittel (MTC), Analysemittel (ANA) und Mittel zur Multiplexauswahl (MAA) der Signale hinsichtlich funktionaler oder unnormaler Einfallssignale (SIN) sowie Mittel (CP, B, P, MTS) enthält, mit denen Typen von Sequenzen (TS) bezüglich des Auftretens, Verschwindens oder der Anwesenheit des Signals erarbeitet werden, daß der Logikschaltkreis (TREV) für die Behandlung des Zustands der Zeitkanäle synchronisierte Mittel aufweist zur Erarbeitung (CT, TCE, DC3) elementarer Befehle (ce) für die drei Logikschaltkreise und zur Speicherung (MEV) der digitalen Strukturen der funktionellen und unnormalen Signale eines dem funktionellen oder unnormalen Signal während der Bestätigung zugewiesenen aktualisierten Verzögerungsworts, wobei Informationen von der zweifach vorhandenen Steuereinheit (UC) über die Art des verwendeten Kodes, die Nummer des Rechners und die eventuelle Maskierung des funktionellen oder unnormalen Signals geliefert werden, sowie Mittel (RCE) zur Speicherung und zur Übertragung von eine eventuelle Änderung der digitalen Struktur des Signals betreffenden Informationen aufweist, und daß der Logikschaltkreis zur Behandlung und Zeitverzögerung (TRET) zugeordnete Mittel (MF1, COD, RMC) zur Aktualisierung einerseits der digitalen Strukturen der gespeicherten Kanalsignale in dem Logikschaltkreis zur Behandlung des Kanalzustands und andererseits zur Aktualisierung der diesen Signalen zugeordneten Bestätigungsverzögerungen besitzt.

3. Schaltungsanordnung nach Anspruch 2, dadurch gekennzeichnet, daß die Mittel zur Überprüfung der Ausgangssignale des digitalen Frequenzempfängers von einer pyramidenförmigen Schaltung aus ODER-Toren gebildet werden, die die Schreibeingänge eines den Datenfluß reduzierenden Speichers (MRD) beaufschlagen, wobei diese Schaltung einerseits ein Paar von ODER-Toren (PO1, PO2) mit je zwei Eingängen besitzt, von denen je einer gemeinsam ist und die über jeden Eingang ein Zweifrequenzsignal (PBI), ein Dreifrequenzsignal (PTR) bzw. ein Einfrequenzsignal (PMO) empfangen, und andererseits eine Gruppe von ODER-Toren (PO3) enthält, der das funktionelle (Zweifrequenz-) Signal oder das unnormale (Dreifrequenz- oder Einfrequenz-) Signal sowie die beiden Signale mit den höchsten Energiepegeln (E1, E2), die von einem elementaren Empfänger stammen, zugeführt erhalten, wobei der Speicher (MRD) in Zeitteilung von den verschiedenen Feldern eines zyklischen Zeitzählers (CT) adressiert wird, der eine Nummer eines Zeitkanals (NVT) und eine Nummer eines Zeitmoments (NIT) in diesem Kanal angibt.

4. Schaltungsanordnung nach den Ansprüchen 2 und 3, dadurch gekennzeichnet, daß die Transkodierung der digitalen Frequenzsignale in funktionelle oder unnormale einfallende Signale von einem programmierbaren Transkodierspeicher (MTC) durchgeführt wird, der von den Lese-Informationen des Speichers zur Datenflußreduzierung (MRD) adressiert wird, kombiniert mit einer Information von der Steuereinheit, die den Signalisationskode angibt, in dem das digitale Frequenzsignal übertragen wird.

5. Schaltungsanordnung nach den Ansprüchen 2 und 4, dadurch gekennzeichnet, daß ein Analyseschaltkreis (ANA) ein Zweifrequenzsignal als unnormal einordnen kann, wenn es in einem anderen Signalisationskode als dem richtigen übertragen wird (zwei Frequenzen außerhalb des Kodes), wobei dieser Analyseschaltkreis mehrere Tore aufweist, nämlich ein erstes UND-Tor (PE11), dem eine für die Anwesenheit eines digitalen Frequenzsignals kennzeichnende Information vom Speicher zur Reduzierung des Datenflusses (MRD) zugeführt wird, ein zweites UND-Tor (PE12), das vom ersten UND-Tor gesteuert wird und vom Transkodierspeicher (MTC) eine für den augenblicklichen Signalisationskode charakteristische Information zugeführt erhält, ein drittes ODER-Tor (PO14), das vom zweiten Tor (PE12) und über einen Eingang des ersten Tors (PE11) gesteuert wird, und daß diese Schaltung sechs Ausgänge besitzt, deren erster (r1) vom Ausgang des dritten Tors gebildet wird, deren drei nächstfolgende Ausgänge fest einen logischen Zustand « 0 » liefern und deren zwei letzte Ausgänge (r5, r6) an zwei Eingänge (ei, ej) des ersten Tors angeschlossen sind, derart, daß die digitale Struktur eines unnormalen Signals erarbeitet wird, wenn dieses Signal ein Signal mit zwei Frequenzen außerhalb des Kodes ist.

6. Schaltungsanordnung nach den Ansprüchen 2, 4 und 5, dadurch gekennzeichnet, daß die digitale Struktur eines funktionellen Signals (an den Kode angepaßtes Zweifrequenz-Signal) oder eines unnormalen Signals (Einfrequenz- oder Dreifrequenz-Signal), das vom Transkodierspeicher (MTC) geliefert wird, oder die Struktur eines unnormalen Zweifrequenzsignals außerhalb des Kodes, das vom Analyseschaltkreis (ANA) stammt, ein gleiches Format besitzt, das ein erstes Binärelement (ES) zur Anzeige des funktionellen oder unnormalen Zustands des Signals, fünf folgende Bits eines funktionellen Signals zur Anzeige der in diesem Signal enthaltenen Information und zwei letzte Bits eines unnormalen Signals enthält, das die Anzahl der dieses Signal bildenden Frequenzen bezeichnet, wobei die funktionelle oder unnormale digitale Struktur, die an den Eingängen (q, r) eines Multiplexers (MAA) empfangen wird und ausgangsseitig von einem Bit des Zeitzählers (CT) ausgewählt wird, ein einfallendes Signal (SIN) bildet.

7. Schaltungsanordnung nach den Ansprüchen 2 und 3, mit synchronisierten Mitteln zur Verteilung elementarer Befehle auf die Logikschaltkreise und Speicherschaltkreise und zur Aktualisierung der funktionellen und unnormalen Signale, dadurch gekennzeichnet, daß diese Mittel einen Speicher oder eine Tabelle für Elementarbefehle (TCE) enthält, der von den geringwertigen Stellen (ATC) des Binärelementefelds des Zeitzählers (CT) adressiert wird, und einen Kanalzustandsspeicher (MEV), der die funktionellen und unnormalen Signale zur Anzeige des funktionellen oder unnormalen Zustands der Kanäle bewahrt, wobei die Seitenanzahl dieses Speichers der Anzahl der Kanäle eines Rahmens entspricht und jede Seite zwei Zonen (SF, SA) für funktionelle und unnormale Wörter bezüglich der augenblicklich der Bestätigung unterworfenen Signale (SCC) und der vorher bestätigten Signale (SCP) enthält, während die Seiten des Kanalzustandsspeichers (MEV) von den höherwertigen Stellen des Felds (NVT) des Zeitzählers adressiert werden, mit denen die Nummer des Kanals bezeichnet wird, wobei die Seitenzone, die sich auf die funktionellen oder unnormalen Signale bezieht, vom geringstwertigen Bit (A) der Adressierung (ATC) der Elementarbefehltabelle (CCE) adressiert wird und die Tabelle Folgebefehle an jeden Logikschaltkreis verteilt und ein Wort des Kanalzustandsspeichers (MEV) adressiert.

8. Schaltungsanordnung nach den Ansprüchen 2 und 7, dadurch gekennzeichnet, daß das einfallende funktionelle oder unnormale Signal in den Kanalzustandsspeicher (MEV) eingeschrieben und während der ihm zugeteilten Bestätigungszeit (Signal, das augenblicklich bestätigt wird SCC) aktualisiert wird, während das vorher bestätigte Signal (SCP) erneut am Ende der Bestätigung eingeschrieben wird und diese Signale (SIN, SCC, SCP) sowie ein Zeitverzögerungswort (MTF, MTA) je nach dem funktionellen oder unnormalen Zustand in den Kanalzustandsspeicher (MEV) über einen zentralisierenden Multiplexer (MCI), dessen Eingänge von der Adresse des Wortes dieses Speichers ausgewählt werden, eingeschrieben und (oder) erneut eingeschrieben werden.

# FIG.1

# FIG.2

UE

E/S 21

S35
S36

TREV

TRET

TRAN

E11

RNF

DCS

# FIG.3

## FIG.4

## FIG.5

## FIG.6

## FIG.8

## FIG.7

FIG.9

FIG.10

0 037 048

# FIG.11

# FIG.12

FIG.13

# FIG.14